# EUROPÄISCHE PATENTSCHRIFT

(11) **EP 0 617 204 B1**
(45) Veröffentlichungstag und Bekanntmachung des Hinweises auf die Patenterteilung: **22.01.1997**
(21) Anmeldenummer: 94890047.7
(22) Anmeldetag: 23.02.1994
(51) Int. Cl.: F16B 12/40, F16B 12/30, A47B 13/02, A47B 17/00

(54) **Möbel mit einem aus zylindrischen Elementen zusammengesetzten Tragwerk**
Piece of furniture, forming a supporting structure made of cylindrical elements
Meuble formant une structure porteuse composée d'éléments cylindriques

(30) Priorität: 23.02.1993 AT 349/93
(43) Veröffentlichungstag der Anmeldung: 28.09.1994
(73) Patentinhaber: Jessenko, Rudolf, A-8042 Graz (AT)
(72) Erfinder: Jessenko, Rudolf, A-8042 Graz (AT)
(74) Vertreter: Krause, Walter, Dr. Dipl.-Ing.

(56) Entgegenhaltungen:
- FR-A- 1 210 439
- FR-A- 2 599 097
- GB-A- 2 146 089

## Beschreibung

Die Erfindung betrifft ein Möbel mit einem aus zylindrischen Elementen zusammengesetzten Tragwerk, mit mindestens einem eine Hülse aufweisenden Andockelement zur Verbindung mit einem oder mehreren rohrförmigen Fortsetzungselementen, wobei jeweils ein Fortsetzungselement über ein achsgleiches und im wesentlichen zylindrisches Verbindungselement radial an der Hülse befestigbar ist.

Möbel mit einem durch Rohre oder Stangen gebildeten metallischen Tragwerk sind bekannt. Solche Tragwerke sind sehr stabil, haben geringes Gewicht, sind pflegeleicht und werden daher insbesonders in Büroräumen, beispielsweise für Tische, Regale, Sitzmöbel u.s.w. häufig verwendet.

Solche herkömmliche Tragwerke haben jedoch den Nachteil, daß sie eigens für jedes Möbel angefertigt werden müssen und daß durch das starre Tragwerk am fertigen Möbel nur mehr sehr begrenzte Änderungs- und Ergänzungsmöglichkeiten bestehen. Um die nötige Stabilität des Tragwerkes zu erreichen, sind diese meist nur aus wenigen einzelnen Elementen zusammengesetzt, was sich allerdings nachteilig auf die Verpackungsabmessungen und die Handhabung beim Transport auswirkt.

Inneneinrichtungen sollen heute möglichst individuelle und vielfältige Gestaltungsmöglichkeiten erlauben. Diese Anforderung kann durch herkömmliche Tragwerke nur sehr schlecht erfüllt werden.

Aus der US-A 3 891 334 ist ein Möbel der eingangs genannten Art bekannt, bei dem die Verbindung zwischen einer vertikalen Hülse und einem rohrförmigen Fortsetzungselement durch eine Spannvorrichtung vorgenommen wird, welche im wesentlichen aus einem exzentrischen, an der Hülse angeschraubten Stumpf und einer auf den Stumpf aufgesetzten und gegen diesen verdrehbaren zylindrischen Anschlußmuffe besteht, deren Mantelfläche zwei radial nach außen verbiegbare Spannklauen aufweist. Auf die Muffe wird das Fortsetzungselement aufgesetzt. Durch Verdrehen der Anschlußmuffe relativ zum Stumpf wirkt der exzentrische Teil des Stumpfes auf die Spannklauen der Anschlußmuffe ein, und drückt diese radial nach außen, wodurch Fortsetzungselement und Muffe miteinander kraftschlüssig verbunden sind. Diese Kupplungsverbindung weist allerdings relativ viele und kompliziert geformte Elemente auf, wodurch der Herstellungsaufwand relativ hoch ist. Ein weiterer Nachteil der Klemmverbindung zwischen der Muffe und dem Fortsetzungselement ist, daß durch Verdrehen des Fortsetzungselementes ein unbeabsichtigtes Lösen der Kupplungsverbindung nicht auszuschließen ist. Deshalb ist der Anwendungsbereich dieser Klemmverbindung nur auf solche Fälle beschränkt, bei denen fast kein Drehmoment auf das Fortsetzungselement ausgeübt wird.

Aufgabe der Erfindung ist es, ein Tragwerk für Möbel vorzuschlagen, das diese Nachteile vermeidet, und eine Vielfalt von individuellen und funktionellen Gestaltungsmöglichkeiten, einfache Herstellung und Montage, sowie leichten Transport erlaubt und trotzdem ausreichende Stabilität aufweist.

Erfindungsgemäß wird die Aufgabe dadurch gelöst, daß das Verbindungselement als Verbindungszapfen ausgeführt ist, dessen größter Durchmesser kleiner ist als der Innendurchmesser des Fortsetzungselementes und das Fortsetzungselement achsgleich zur Gänze auf diesen aufsetzbar und mit dem Verbindungszapfen löslich verbindbar ist, wobei der Verbindungszapfen direkt an der Hülse über eine den Verbindungszapfen axial durchsetzende, mit einer Gewindebohrung in der Wand der Hülse zusammenwirkende Befestigungsschraube, vorzugsweise eine Innensechskantschraube angeschraubt ist. Dadurch ist einerseits ein problemloser Transport mit geringem Verpackungsvolumen, eine äußerst einfache Montage und andererseits eine sichere Verbindung zwischen Hülse und einem oder mehreren Fortsetzungselementen mit einer sehr geringen Anzahl von Teilen möglich.

Eine stabile Verbindung wird dadurch ermöglicht, daß der Verbindungszapfen im Anschlußbereich an die Hülse eine entsprechend dem Durchmesser der Hülse konkav gekrümmte Stirnfläche aufweist. Die konkave Stirnfläche des Verbindungszapfens wirkt dabei als Verdrehsicherung.

Vorzugsweise ist vorgesehen, daß das Fortsetzungselement direkt an die Hülse anschließt und im Anschlußbereich an die Hülse eine entsprechend dem Durchmesser der Hülse konkav gekrümmte Stirnfläche aufweist. Dadurch wird einerseits die Zahl der Teile auf ein Mindestmaß beschränkt und andererseits dem Möbel ein ästhetisch ansprechendes Erscheinungsbild gegeben, wobei vorspringende Teile und Trennfugen an der Möbeloberfläche möglichst vermieden werden. Die konkav gekrümmte Stirnfläche des Fortsetzungselementes wirkt ebenfalls als Verdrehsicherung.

Eine weitere Ausführungsform der Erfindung betrifft Möbel mit einem aus zylindrischen Elementen zusammengesetzten Tragwerk, mit mindestens einem eine Hülse aufweisenden Andockelement zur Verbindung mit einem oder mehreren rohrförmigen Fortsetzungselementen, wobei das Andockelement mindestens einen radial an der Hülse lösbar befestigten, hohlen zylindrischen Stumpf, dessen Durchmesser kleiner ist als der Durchmesser der Hülse, und dessen Achse zu der Hülsenachse etwa normal steht, wobei im Anschlußbereich an die Hülse die Stirnfläche des Stumpfes entsprechend dem Durchmesser der Hülse konkav gekrümmt und von einer zentrischen Bohrung durchbrochen ist, und wobei die Wand der Hülse im Bereich der Achse des Stumpfes eine Befestigungsbohrung zur Aufnahme einer den Stumpf axial durchdingenden Befestigungsschraube aufweist, sowie mit einem mit dem jeweiligen Stumpf achsgleich und lösbar verbundenen Verbindungselement für den Anschluß eines rohrförmigen Fortsetzungselementes. Erfindungsgemäß ist dabei vorgesehen, daß das Verbindungselement als Verbindungszapfen ausgeführt ist, und der einen konstanten Außendurchmesser aufweisende Stumpf an seinem dem Anschlußbereich an die Hülse gegenüberliegenden Ende ein Innengewinde aufweist, welches mit einem Außengewinde an einem Ende des Verbindungszapfens zusammenwirkt, wobei der größte Durchmesser des Verbindungszapfens kleiner ist als der Innendurchmesser des Fortsetzungselementes und das Fortsetzungselement achsgleich mit dem Verbindungszapfen auf diesem aufgesetzt und lösbar verbunden ist. Hülse, Stumpf und Verbindungszapfen stellen ein universelles Andockelement dar, an dem sowohl über ein Fortsetzungselement eine weitere Hülse als auch ein Endelement, wie beispielsweise ein Standfuß oder ein Rollenelement angeschlossen werden kann. Dadurch ist eine sichere, aber dennoch flexibel zu gestaltende Verbindung zwischen den einzelnen Teilen des Tragwerkes möglich. Alle Elemente können sehr leicht und ohne Spezialwissen mit einfachen Werkzeugen montiert und demontiert werden.

Eine sichere axiale Verbindung bei jeder der erfindungsgemäßen Ausführungsformen wird dadurch erzielt, daß zur Verbindung des Verbindungszapfens mit dem Fortsetzungselement eine die Wand des Fortsetzungselementes radial durchsetzende Wurmschraube vorgesehen ist. Dabei ist es sehr vorteilhaft, wenn der Verbindungszapfen eine Ringnut aufweist, welche mit der in das Fortsetzungselement eingeschraubten Wurmschraube zusammenwirkt. Dadurch kann das Fortsetzungselement gegenüber dem Verbindungszapfen bei nicht zur Gänze eingeschraubter Wurmschraube verdreht werden, sodaß die Wurmschraube aus dem Blickfang gedreht werden kann. Genauso kann vorgesehen sein, daß der Verbindungszapfen zumindest eine radiale Bohrung aufweist, welche mit der in das Fortsetzungselement eingeschraubten Wurmschraube zusammenwirkt. Beide Verbindungsarten ermöglichen eine sichere und stabile form- und kraftschlüssige Verbindung.

In einer bevorzugten Ausführungsform ist vorgesehen, daß die Hülse auf einen vorzugsweise zylindrischen Tragkern aufschiebbar ist. Der Tragkern, welcher als Stange oder als Rohr ausgebildet sein kann, sorgt für die nötige Stabilität des Tragwerkes, wobei Hülse und Tragkern zueinander möglichst geringes Spiel aufweisen sollen. Die Hülse kann einerseits in axialer Richtung beliebig verstellt und andererseits um ihre Achse gedreht werden.

In einer weiteren äußerst vorteilhaften Ausführungsvariante sind zur axialen Einrichtung des Andockelementes auf dem Tragkern ein oder mehrere, auf den Tragkern aufschiebbare Distanzhülsen vorgesehen. Durch Verwendung von Distanzhülsen mit geeigneter Länge kann jede beliebige axiale Position am Tragkern erreicht werden. Im folgenden wird die Erfindung anhand von in den Fig. dargestellten

Ausführungsbeispielen näher erläutert. Es zeigen:
- Fig. 1: ein Tragwerk mit den erfindungsgemäßen Andockelementen,
- Fig. 2: ein vergrößertes Detail eines Andockelementes aus Fig. 1 in einer ersten erfindungsgemäßen Ausführungsform,
- Fig. 3: einen Schnitt durch das Andockelement nach der Linie III-III in Fig. 2,
- Fig. 4 und 5: Einzelteile des Andockelementes im Axialschnitt bzw. Ansicht,
- Fig. 6: ein vergrößertes Detail eines Andockelementes aus Fig. 1 in einer zweiten erfindungsgemäßen Ausführungsform,
- Fig. 7: einen Schnitt durch das Andockelement nach der Linie VII-VII in Fig. 6,
- Fig. 8: einen Einzelteil des Andockelementes in größerem Maßstab,
- Fig. 8a: einen Schnitt durch einen erfindungsgemäßen Verbindungszapfen nach der Linie VIIIa-VIIIa in Fig. 8,
- Fig. 9: in einer für den Gebrauch gedachten Zusammenstellung von Möbeln mit erfindungsgemäßen Andockelementen im Grundriß,
- Fig.10: eine Ansicht von Möbeln aus der Richtung X in Fig. 9,
- Fig.11: eine Ansicht von Möbeln aus der Richtung XI in Fig. 9,
- Fig.12: eine Ansicht und einen Schnitt nach der Linie XII-XII in Fig. 9,
- Fig.13: eine Ansicht eines Möbels aus der Richtung XIII in Fig. 9.

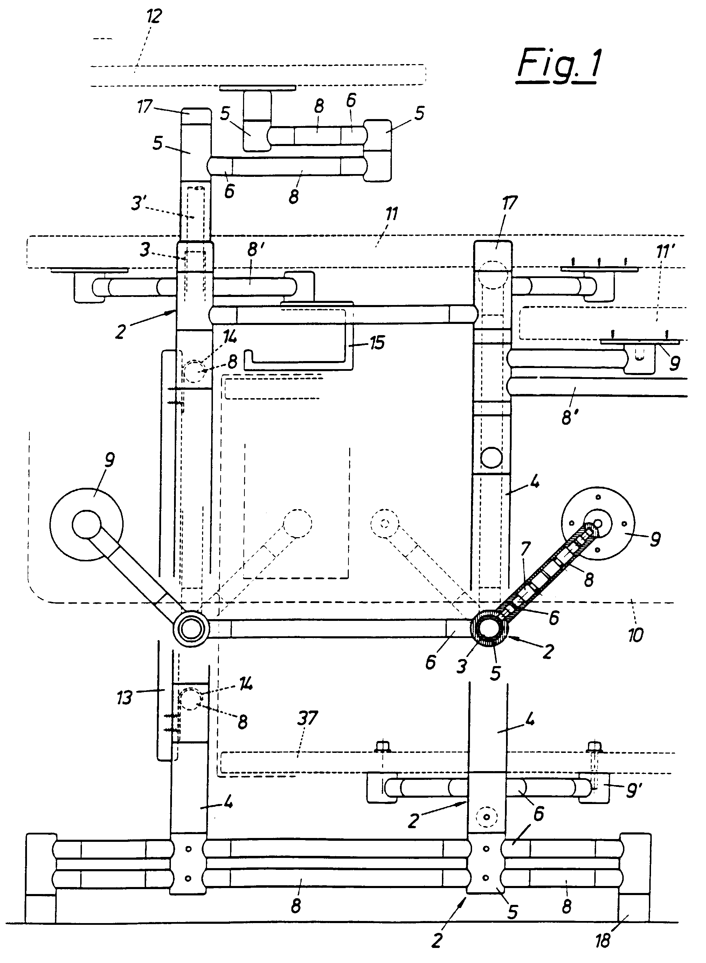

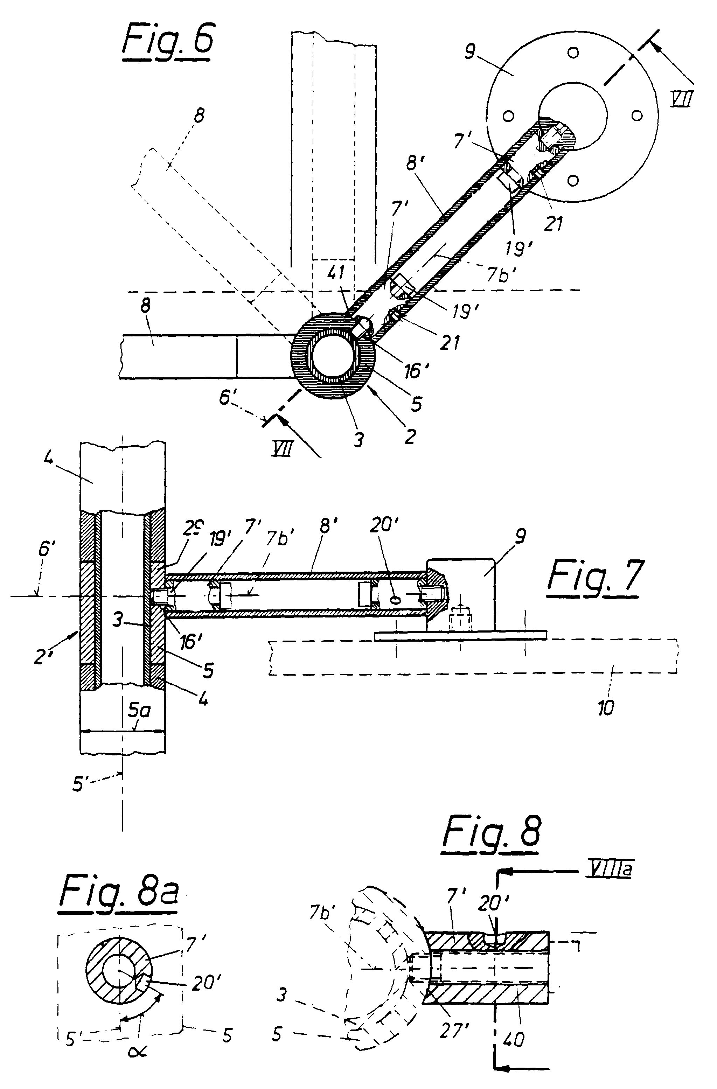

In Fig. 1 ist eine Seitenansicht eines Tragwerkes 1 dargestellt. Das Tragwerk 1 besteht aus den Andockelementen 2 und 2', den Tragkernen 3 und den Distanzhülsen 4. Ein Andockelement 2 beinhaltet eine auf den Tragkern 3 aufgesetzte Hülse 5, mindestens einen auf die Hülse 5 angeschraubten Stumpf 6 und einen in den Stumpf 6 eingeschraubten Verbindungszapfen 7, an welchen ein Fortsetzungselement 8 aufgesetzt ist. Ein weiteres erfindungsgemäßes Andockelement 2', dessen Details in den Figuren 6 bis 8a dargestellt sind, besteht aus einer auf einen Tragkern 3 aufgesetzten Hülse 5, mindestens einem an die Hülse 5 angeschraubten Verbindungszapfen 7', über welchen zur Gänze ein Fortsetzungselement 8' aufgesetzt ist, wobei das Fortsetzungselement 8' direkt an die Hülse 5 anschließt. An jedes Fortsetzungselement 8 schließt über einen Verbindungszapfen 7 und einem Stumpf 6, beispielsweise ein Befestigungsflansch 9 für Wandteile 10, Tischplatten 11 oder Schwenkebenen 12 an. Senkrechte Wände, beispielsweise die Rückwand 13, können auch über Haken 14 an horizontal verlaufenden Fortsetzungselementen 8 eingehängt werden. Auch Kabelkanäle 15 können über Befestigungsteile 9' mit Andockelementen 2 verbunden sein. Auch Anbauteile, wie z.B. Ladenboxen 37, können auf diese Weise über Befestigungsteile 9' montiert sein. Als axiale Abschlußelemente von Distanzhülsen 4 oder Hülsen 5 können Abdeckkappen 17 oder Standfüße 18 vorgesehen sein.

Wird eine axiale Verlängerung des Tragkernes 3 gewünscht, kann die Abdeckkappe 17 entfernt und in den als Rohr ausgebildeten ersten Tragkern 3 ein weiterer Tragkern 3' mit geringerem Durchmesser eingesetzt werden.

Das Andockelement 2 kann in verschiedenen Größen und Durchmessern ausgeführt sein.

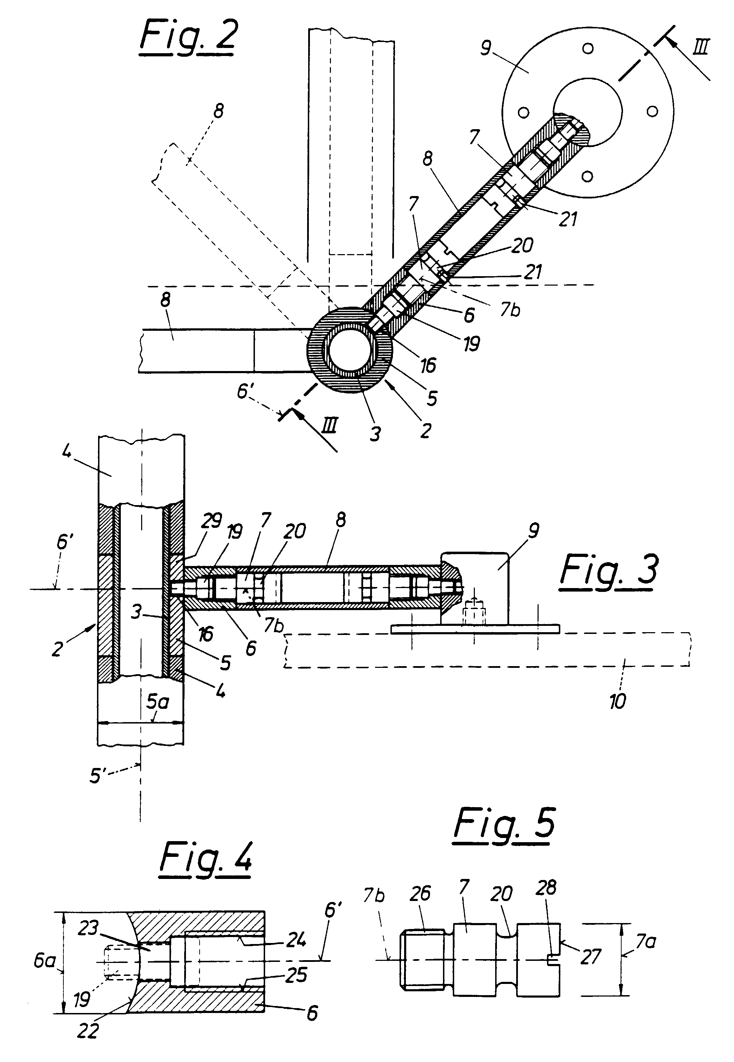

Wie in Fig. 2 und 3 ersichtlich, ist jeder Stumpf 6 mit einer in eine Gewindebohrung 16 der Hülsenwand 29 eingeschraubten Innensechskantschraube 19 radial an der Hülse 5 befestigt, welche auf einem rohrförmigen Tragkern 3 in axialer Richtung aufgeschoben ist. Die Achse 6' des Stumpfes 6 und die Achse 5' der Hülse 5 stehen etwa normal aufeinander. Mit 5a ist der Durchmesser der Hülse 5, mit 6a der Durchmesser des Stumpfes 6 bezeichnet. In den Stumpf 6 ist achsgleich mit diesem der Verbindungszapfen 7 eingeschraubt. Der Verbindungszapfen 7 weist eine Ringnut 20 auf, welche mit einer in das Fortsetzungselement 8 eingeschraubten Wurmschraube 21 zusammenwirkt und die eine kraft- und formschlüssige Verbindung zwischen dem Fortsetzungselement 8 und dem Verbindungszapfen 7 herstellt.

Der Stumpf 6 aus den Fig. 2 und 3 ist in Fig. 4 vergrößert dargestellt. Deutlich ist die konkav gestaltete Stirnfläche 22 zu sehen, welche an die Form der Hülse 5 angeglichen ist und die Verdrehsicherung des Stumpfes 6 bewirkt. Die Stirnfläche 22 wird von einer zentrischen Bohrung 23 durchsetzt, welche die Innensechskantschraube 19 aufnimmt. Die Innenwand 24 des Stumpfes weist ein Innengewinde 25 auf, welches mit dem Außengewinde 26 des in Fig. 5 vergrößert dargestellten Verbindungszapfens 7 zusammenwirkt. Der Verbindungszapfen 7 weist an der dem Außengewinde 26 gegenüberliegenden Stirnfläche 27 beispielsweise einen Schlitz 28 auf, über welchen der Verbindungszapfen 7 etwa mit einem Schraubenzieher in den Stumpf 6 eingeschraubt werden kann. Mit 7a ist der Durchmesser des Verbindungszapfens 7 bezeichnet.

In der in den Fig. 6 bis 8 gezeigten Ausführungsvariante der Erfindung weist der Verbindungszapten 7' eine axiale Bohrung 40 zur Aufnahme der Innensechskantschraube 19' auf. Die Innensechskantschraube 19' ist in die Gewindebohrung 16' der Hülse 5 eingeschraubt, wodurch der Verbindungszapfen 7' direkt an der Hülse 5 starr befestigt ist. Die Stirnfläche 27' des Verbindungszapfens 7', als auch die Stirnfläche 41 des Fortsetzungselementes 8' sind konkav, entsprechend der Oberflächenkrümmung der Hülse 5, geformt. Die starre Verbindung zwischen dem Fortsetzungselement 8' und einem Verbindungszapfen 7' wird, wie bei der in den Fig. 2 bis 5 gezeigten Ausführungsvariante der Erfindung durch eine das Fortsetzungselement 8' durchdringende Wurmschraube 21 erreicht, welche in die als Sackloch ausgeführte radiale Bohrung 20' des Verbindungszapfens 7' eingreift. Der Innendurchmesser des Fortsetzungselementes 8' sollte dabei nur geringfügig größer sein als der Durchmesser 7a' des Verbindungszapfens 7'.

Um die Wurmschraube 21 einerseits leicht zugänglich und andererseits nicht unmittelbar im Blickfang zu haben, wird die Bohrung 20' in der unteren Hälfte des Verbindungszapfens 7' und etwa in einem Winkel α von 60° bezüglich der Hülsenachse 5' angeordnet. In den Fig. 6 und 8 ist die Bohrung 20' zur Verdeutlichung jeweils in die Schnittebene gedreht.

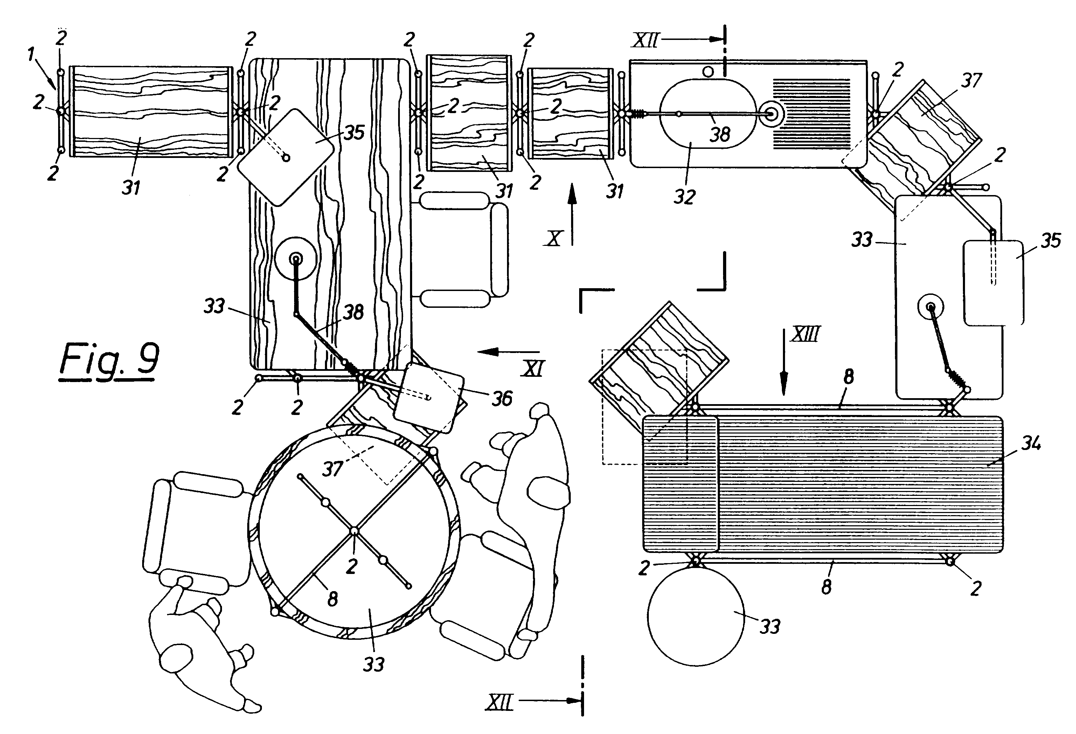

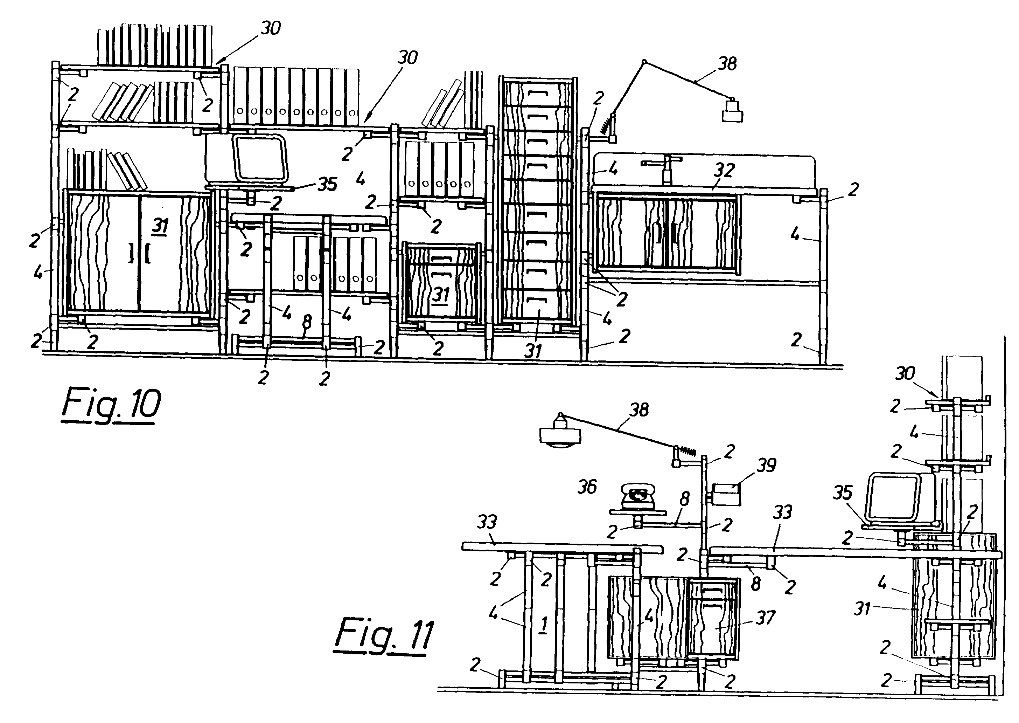

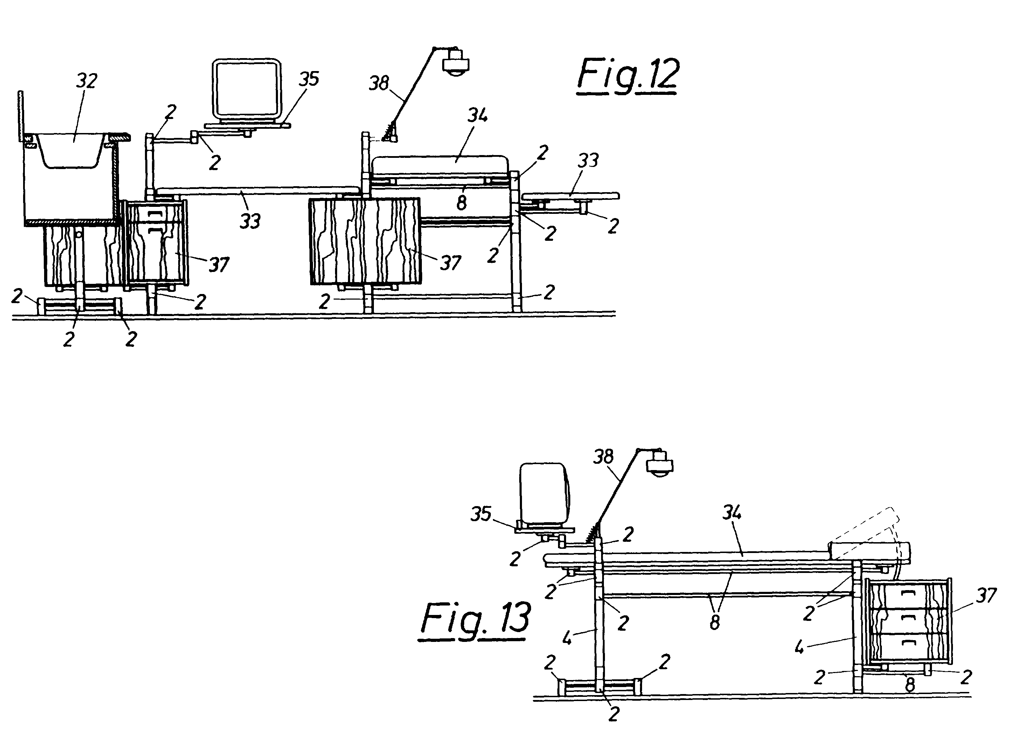

In den Fig. 9 bis 13 ist eine Büromöbelgruppe dargestellt, bei welcher Tragwerke 1 mit den erfindungsgemäßen Andockelementen 2 und 2' verwendet werden (wegen der Übersichtlichkeit sind die Andockelemente in diesen Figuren alle mit "2" angedeutet). Wie zu sehen ist, können die Andockelemente 2 und 2' beispielsweise für Tragwerke 1 von Regalen 30, Schränken 31, Waschtischen 32, Tischen 33, Liegen 34, Bildschirmebenen 35, Telefonebenen 36, Ladenboxen 37, Lampenhalterungen 38 und Ablagen 39 verwendet werden. Wie strichliert an einer Ladenbox 37 angedeutet ist, können die Möbel in einfacher Weise gegeneinander um vertikale Achsen verdreht werden.

Jede Hülse 5 kann mit mehreren Fortsetzungselementen verbunden sein.

Die Anwendung der erfindungsgemäßen Andockelemente beschränkt sich nicht auf die gezeigten Möbeln, sondern ist auch für viele andere Anwendungsfälle, wie Traggestelle von Sesseln oder Sitzbänken, erweiterbar.

## Patentansprüche

1. Möbel mit einem aus zylindrischen Elementen zusammengesetzten Tragwerk (1), mit mindestens einem eine Hülse (5) aufweisenden Andockelement (2) zur Verbindung mit einem oder mehreren rohrförmigen Fortsetzungselementen (8'), wobei jeweils ein Fortsetzungselement (8') über ein achsgleiches und im wesentlichen zylindrisches Verbindungselement (7') radial an der Hülse (5) befestigbar ist, **dadurch gekennzeichnet,** daß das Verbindungselement als Verbindungszapfen (7') ausgeführt ist, dessen größter Durchmesser (7a') kleiner ist als der Innendurchmesser des Fortsetzungselementes (8') und das Fortsetzungselement (8') achsgleich zur Gänze auf diesen aufsetzbar und mit dem Verbindungszapfen (7') löslich verbindbar ist, wobei der Verbindungszapfen (7') direkt an der Hülse (5) über eine den Verbindungszapfen (7') axial durchsetzende, mit einer Gewindebohrung (16) in der Wand (29) der Hülse (5) zusammenwirkende Befestigungsschraube, vorzugsweise eine Innensechskantschraube (19') angeschraubt ist.

2. Möbel nach Anspruch 1, **dadurch gekennzeichnet,** daß der Verbindungszapfen (7') im Anschlußbereich an die Hülse (5) eine entsprechend dem Durchmesser (5a) der Hülse (5) konkav gekrümmte Stirnfläche (27') aufweist.

3. Möbel nach Anspruch 1 oder 2, **dadurch gekennzeichnet,** daß das Fortsetzungselement (8') direkt an die Hülse (5) anschließt und im Anschlußbereich an die Hülse (5) eine entsprechend dem Durchmesser (5a) der Hülse (5) konkav gekrümmte Stirnfläche (41) aufweist.

4. Möbel mit einem aus zylindrischen Elementen zusammengesetzten Tragwerk (1), mit mindestens einem eine Hülse (5) aufweisenden Andockelement (2) zur Verbindung mit einem oder mehreren rohrförmigen Fortsetzungselementen (8), wobei das Andockelement (2) mindestens einen radial an der Hülse (5) lösbar befestigten, hohlen zylindrischen Stumpf (6), dessen Durchmesser (6a) kleiner ist als der Durchmesser (5a) der Hülse (5), und dessen Achse (6') zu der Hülsenachse (5') etwa normal steht, wobei im Anschlußbereich an die Hülse (5) die Stirnfläche (22) des Stumpfes (6) entsprechend dem Durchmesser (5a) der Hülse (5) konkav gekrümmt und von einer zentrischen Bohrung (23) durchbrochen ist, und wobei die Wand (29) der Hülse (5) im Bereich der Achse (6') des Stumpfes (6) eine Befestigungsbohrung (16) zur Aufnahme einer den Stumpf (6) axial durchdingenden Befestigungsschraube (19) aufweist, sowie mit einem mit dem jeweiligen Stumpf (6) achsgleich und lösbar verbundenen Verbindungselement (7) für den Anschluß eines rohrförmigen Fortsetzungselementes (8) aufweist, **dadurch gekennzeichnet,** daß das Verbindungselement als Verbindungszapfen (7) ausgeführt ist, und der einen konstanten Außendurchmesser aufweisende Stumpf (6) an seinem dem Anschlußbereich an die Hülse (5) gegenüberliegenden Ende ein Innengewinde (25) aufweist, welches mit einem Außengewinde (26) an einem Ende des Verbindungszapfens (7) zusammenwirkt, wobei der größte Durchmesser (7a) des Verbindungszapfens (7) kleiner ist als der Innendurchmesser des Fortsetzungselementes (8) und das Fortsetzungselement (8) achsgleich mit dem Verbindungszapfen (7) auf diesem aufgesetzt und lösbar verbunden ist.

5. Möbel nach einem der Ansprüche 1 bis 4, **dadurch gekennzeichnet,** daß zur Verbindung des Verbindungszapfens (7, 7') mit dem Fortsetzungselement (8, 8') eine die Wand des Fortsetzungselementes (8, 8') radial durchsetzende Wurmschraube (21) vorgesehen ist.

6. Möbel nach Anspruch 5, **dadurch gekennzeichnet**, daß der Verbindungszapfen (7, 7') eine Ringnut (20) aufweist, welche mit der in das Fortsetzungselement (8, 8') eingeschraubten Wurmschraube (21) zusammenwirkt.

7. Möbel nach Anspruch 5, **dadurch gekennzeichnet,** daß der Verbindungszapfen (7, 7') zumindest eine radiale Bohrung (20') aufweist, welche mit der in das Fortsetzungselement (8, 8') eingeschraubten Wurmschraube (21) zusammenwirkt.

8. Möbel nach einem der Ansprüche 1 bis 7, **dadurch gekennzeichnet,** daß die Hülse (5) auf einen vorzugsweise zylindrischen Tragkern (3, 3') aufschiebbar ist.

9. Möbel nach einem der Ansprüche 1 bis 8, **dadurch gekennzeichnet,** daß zur axialen Einrichtung des Andockelementes (2, 2') auf dem Tragkern (3, 3') eine oder mehrere, auf den Tragkern (3) aufschiebbare Distanzhülsen (4) vorgesehen sind.

## Claims

1. Furniture with a supporting frame (1) made up of cylindrical elements, with at least one plug-on element (2) having a sleeve (5) for connection to one or more tubular extension elements (8'), a respective extension element (8') being secured radially to the sleeve (5) through a coaxial and substantially cylindrical connecting element (7'), **characterised in that** the connecting element is in the form of a connecting pin (7') of which the maximum diameter (7a') is less than the inside diameter of the extension element (8') and the extension element (8') fits onto it as a whole and is detachably connected to the connecting pin (7'), the connecting pin (7') being screwed directly onto the sleeve (5) through an attachment screw, preferably a hexagon socket screw (19'), extending axially through the connecting pin (7') and cooperating with a threaded bore (16) in the wall (29) of the sleeve (5).

2. Furniture according to claim 1, **characterised in that** the connecting pin (7') has a face (27') curved concavely to match the diameter (5a) of the sleeve (5) in the region of connection to the sleeve (5).

3. Furniture according to claim 1 or 2, **characterised in that** the extension element (8') is joined directly on to the sleeve (5) and has a face (41) concavely curved to match the diameter (5a) of the sleeve (5) in the region of connection to the sleeve (5).

4. Furniture with a supporting frame (1) made up of cylindrical elements, with at least one plug-on element (2) having a sleeve (5) for connection to one or more tubular extension elements (8), the plug-on element (2) having at least one hollow cylindrical spigot (6) secured radially to the sleeve (5) in a detachable manner, the diameter (6a) of the spigot being less than the diameter (5a) of the sleeve (5) and its axis (6') extending substantially perpendicular to the axis (5') of the sleeve, the face (22) of the spigot (6) being concavely curved to match the diameter (5a) of the sleeve (5) in the region of connection to the sleeve (5) and having a central bore (23) breaking through it, and the wall (29) of the sleeve (5) having in the region of the axis (6') of the spigot (6) an attachment bore (16) for receiving an attachment screw (19) which passes axially through the spigot (6), as well as having a connecting element (7), coaxial with the respective spigot (6) and detachably connected to it, for connection to a tubular extension element (8) **characterised in that** the connecting element is in the form of a connecting pin (7) and the spigot (6), which is of constant outside diameter, has on that end of it which is opposite to the region of connection to the sleeve (5) an internal screw thread (25) which co-operates with an external thread (26) on one end of the connecting pin (7), the maximum diameter (7a) of the connecting pin (7) being smaller than the inside diameter of the extension element (8) and the extension element (8) being mounted on the connecting pin (7) coaxially with it and connected detachably to it.

5. Furniture according to one of claims 1 to 4, **characterised in that** for connecting the connecting pin (7,7') to the extension element (8,8') there is provided a grub screw (21) passing radially through the wall of the extension element (8,8').

6. Furniture according to claim 5, **characterised in that** the connecting pin (7,7') has an angular groove (20) which co-operates with the grub screw (21) which is screwed into the extension element (8,8').

7. Furniture according to claim 5, **characterised in that** the connecting pin (7,7') has at least one radial bore (20') which co-operates with the grub screw (21) which is screwed into the extension element (8,8').

8. Furniture according to one of claims 1 to 7, **characterised in that** sleeve (5) can be slid onto a preferably cylindrical supporting core (3,3').

9. Furniture according to one of claims 1 to 8, **characterised in that** one or more spacer sleeves (4) which are slidable onto the supporting core (3) is or are provided for axially locating the plug-on element (2,2') on the supporting core (3,3').

## Revendications

1. Meuble avec une structure porteuse (1) assemblée à partir d'éléments cylindriques, avec au moins un élément d'amarrage (2) comportant un manchon (5) pour la liaison avec un ou plusieurs éléments de prolongement (8') tubulaire, tandis que respectivement un élément de prolongement (8') peut être fixé radialement sur le manchon (5) par un élément de raccordement (7') de même axe et essentiellement cylindrique,
caractérisé en ce que
l'élément de raccordement est réalisé en tenon de fixation (7'), dont le plus grand diamètre (7a') est plus petit que le diamètre intérieur de l'élément de prolongement (8') et l'élément de prolongement (8') de même axe est applicable en totalité sur celui-ci et peut être engagé avec le tenon de fixation (7') mais de manière détachable, tandis que le tenon (7') est vissé directement sur le manchon (5) par une vis de fixation, de préférence une vis à six pans creux (19'), traversant axialement le tenon de fixation (7'), et coopérant avec un alésage fileté (16) dans la paroi (29) du manchon (5).

2. Meuble selon la revendication 1,
caractérisé en ce que
le tenon de fixation (7') comporte dans la zone de raccordement sur le manchon (5) une surface frontale (27') incurvée de manière concave correspondant au diamètre (5a).

3. Meuble selon les revendications 1 ou 2,
caractérisé en ce que
l'élément de prolongement (8') se raccorde directement au manchon (5) et comporte dans la zone de raccordement au manchon (5) une surface frontale incurvée (41) de manière concave correspondant au diamètre (5a) du manchon (5).

4. Meuble avec une structure porteuse (1) assemblée à partir d'éléments cylindriques, avec au moins un élément d'amarrage (2) comportant un manchon (5) pour la liaison avec un ou plusieurs éléments de prolongement (8) tubulaires, tandis que l'élément d'amarrage (2) comporte au moins un tronçon (6) cylindrique creux, fixé mais détachable radialement sur le manchon (5), dont le diamètre (6a) est plus petit que le diamètre (5a) du manchon (5) et dont l'axe (6') est sensiblement perpendiculaire à l'axe du manchon (5'), tandis qu'au niveau du raccordement au manchon (5) la surface frontale (22) du tronçon (6) correspondant au diamètre (5a) est incurvée de manière concave et est traversée par un alésage centrique (23) et tandis que la paroi (29) du manchon (5) comporte au niveau de l'axe (6') du tronçon (6) un alésage de fixation (16) destiné à recevoir une vis d'ancrage (19) pénétrant axialement, qui comporte aussi un élément d'assemblage (7) assemblé avec le tronçon (6) respectif, de même axe détachable, destiné au raccordement d'un élément de prolongement tubulaire (8),
caractérisé en ce que
l'élément de fixation est réalisé comme tourillon d'assemblage (7), et le tronçon (6) comportant un diamètre extérieur constant comprend à son extrémité opposée à la zone de raccordement sur le manchon (5) un filetage interne (25), qui coopère avec un filetage externe (26) situé à une extrémité du tourillon d'assemblage (7), le plus grand diamètre (7a) du tourillon d'assemblage (7), étant plus petit que le diamètre intérieur de l'élément de prolongement (8) de même axe que le tourillon d'assemblage (7) étant appliqué sur celui-ci et assemblé de manière détachable.

5. Meuble selon une des revendications 1 à 4,
caractérisé en ce que
pour la fixation du tourillon d'assemblage (7, 7') avec l'élément de prolongement (8, 8'), est prévue une vis sans tête (21) traversant radialement l'élément de prolongement (8, 8').

6. Meuble selon la revendication 5,
caractérisé en ce que
le tourillon d'assemblage (7, 7') comprend une rainure annulaire (20), qui coopère avec la vis sans tête (21) vissée dans l'élément de prolongement (8, 8').

7. Meuble selon la revendication 5,
caractérisé en ce que
le tourillon d'assemblage (7, 7') comprend au moins un alésage radial (20'), qui coopère avec la vis sans tête (21) vissée dans l'élément de prolongement (8, 8').

8. Meuble selon une des revendications 1 à 7,
caractérisé en ce que
le manchon (5) peut coulisser sur un noyau porteur (3, 3') de préférence cylindrique.

9. Meuble selon une des revendications 1 à 8,
caractérisé en ce que
sont prévus sur le dispositif axial de l'élément d'amarrage (2, 2'), un ou plusieurs manchons d'écartement (4) pouvant coulisser sur le noyau porteur (3).
